# EUROPEAN PATENT SPECIFICATION

(11) **EP 2 180 743 B1**
(45) Date of publication and mention of the grant of the patent: **30.04.2014**
(21) Application number: 08291003.5
(22) Date of filing: 24.10.2008
(51) Int. Cl.: H04W 36/18, H04W 16/00

(54) **Virtual base station and method thereof**
Virtuelle Basisstation und Verfahren dafür
Station de base virtuelle et procédé correspondant

(43) Date of publication of application: 28.04.2010
(73) Proprietor: Alcatel Lucent, 75007 Paris (FR)
(72) Inventor: Tabery, Peter, Dipl.-Ing., 80992 München (DE); Schaepperle, Joerg, Dipl.-Ing., 70180 Stuttgart (DE)
(74) Representative: Wetzel, Emmanuelle

(56) References cited:
- US-B1- 7 042 858

## Description

### Field of the invention

The invention relates to a method for forming a virtual base station in a network, to a network element for a mobile communication system, and to a computer program product.

### Background and related art

A connection between a terminal and a network element of a wireless and mobile communication network is generally established via an air interface. The air interface can for example be compliant with GSM, UMTS, LTE or IEEE 802.16. The functions of a protocol can be divided into a series of layers in accordance with the open systems interconnection reference model (OSI model), starting on the applications layer up to the air interface. The main elements of the mobile communication networks are the base stations, and the core network coupled to the base stations. The base station cover typically a reduced area or cell and the mobile terminal communicating with the base stations requires continuously to switch between the base stations.

In US 7 042 858 soft handoffs in an OFDM system are disclosed. Each mobile terminal measures pilot signal strengths of transmissions from adjacent base stations. If the pilot signal strength for a base station exceeds the defined threshold, that base station is added to an active set list. Each mobile terminal notifies the base stations of their active set lists. By providing the set list to the base station controller and the servicing base station, the mobile terminal identifies the sole servicing base station or triggers a soft handoff mode when multiple base stations appear on the active set list. The soft handoff mode uses a combination of scheduling and space-time coding to affect efficient and reliable handoffs.

### Summary of the invention

The invention relates to a method for forming a virtual base station in a mobile communication system, the method comprising: receiving measurements of a set of channel quality between a mobile terminal and a set of base stations; forming a virtual base station by grouping candidate base stations of the set of base stations according to the measured channel quality; synchronizing a radio frame structure and a radio frame transmission time with the candidate base stations forming the virtual base station; transmitting the radio frame structure on the synchronized transmission time to the mobile terminal, wherein the radio frame structure is transmitted by each candidate base station of the virtual base station; receiving data from the mobile terminal, wherein the data is received by each candidate base station forming the virtual base station.

The embodiments are advantageous as they decrease the potential amount of handovers required by a mobile terminal, as the virtual base station covers a bigger area than a single base station. Further, all the base stations forming the virtual base station use a common identifier for identifying the virtual base station. The mobile terminal is not required to identify the different base stations forming the virtual base station, and for the mobile terminal, the communication is identical as if it were communicating with a single base station.

In an embodiment, the method further comprises: comparing the channel quality of each candidate base station with a first threshold; wherein the virtual base station is formed of candidate base stations having a measured channel quality higher than the first threshold.

In a further embodiment, the method further comprises: ordering the candidate base stations by the measured channel quality of each candidate base station;
wherein the virtual base station is formed with a predetermined number of base stations having a highest measured channel quality.

In a further embodiment, the synchronized frame structure for each base station further comprise a common identifier for identifying the virtual base station. In a further embodiment, the network element combines data received from all base station forming the virtual base station.

In a further embodiment, the network element is one of the base stations forming the virtual base station. In a further embodiment, the method further comprises adding a neighbour base station to the virtual base station, if the neighbour base station has a channel quality higher than the first threshold.

In a further embodiment, the method further comprises: measuring a direction of the mobile terminal; adding new base stations to the virtual base station on the direction of the mobile terminal.

In a further embodiment, the method further comprises: measuring a position of the mobile terminal; configuring what antennas of each base station are activated for transmitting the radio frame structure to the mobile terminal.

In a further embodiment, the method further comprises: initiating a handover from the virtual base station to a neighbour virtual base station, if a signal strength received by the mobile terminal from the virtual base station is below a second threshold.

In a further embodiment, the method further comprises: generating a first vector of a first mobile terminal and at least a second vector of at least a second mobile terminal, wherein the first and second vector represent all measured channel qualities between the mobile terminals and the base stations forming a set of base stations; calculating a correlation between the first and the second vector;
initiating transmissions between the mobile terminals and the virtual base station, if the correlation is high; initiating transmissions between the mobile terminals and a neighbour virtual base stations, if the correlation is low.

In a further embodiment, the method further comprises: generating a first vector of a first mobile terminal and at least a second vector of at least a second mobile terminal, wherein the first and second vector represent all measured channel qualities between the mobile terminals and the base stations forming a set of base stations; calculating a correlation between the first and the second vector;
forming a single virtual base station and initiating a transmission between the virtual base station and the candidate mobile terminals, if the correlation is high;
forming a first and a second virtual base station and initiating transmissions between the first mobile terminal and the first virtual base station and between the second mobile terminal and the second virtual base station, if the correlation is low.

In another aspect, the invention relates to a network element for a mobile communication system being operable to perform a method according to any of the preceding embodiments. In a further embodiment, the network element is a base station or a core network element.

In another aspect, the invention relates to a computer program product stored on a storage medium, comprising executable program means for causing a network element to perform a method according to any of the preceding embodiments when the program is run on the base station. In a further embodiment, the network element is a base station or a core network element.

In another aspect, the invention relates to a computer program product stored on a storage medium, comprising executable program means for causing a mobile terminal to perform a method according to any of the preceding embodiments when the program is run on a network element. In a further embodiment, the network element is a base station or a core network element.

### Brief description of the drawings

In the following preferred embodiments of the invention will be described in greater detail by way of example only making reference to the drawings in which:
- Figure 1: shows an example of a mobile communication system,
- Figure 2: shows a second example of a mobile communication system,
- Figure 3: shows a third example of a mobile communication system,
- Figure 4: shows a fourth example of another mobile communication system,
- Figure 5: shows a flowchart of a method according to an embodiment.

### Detailed description

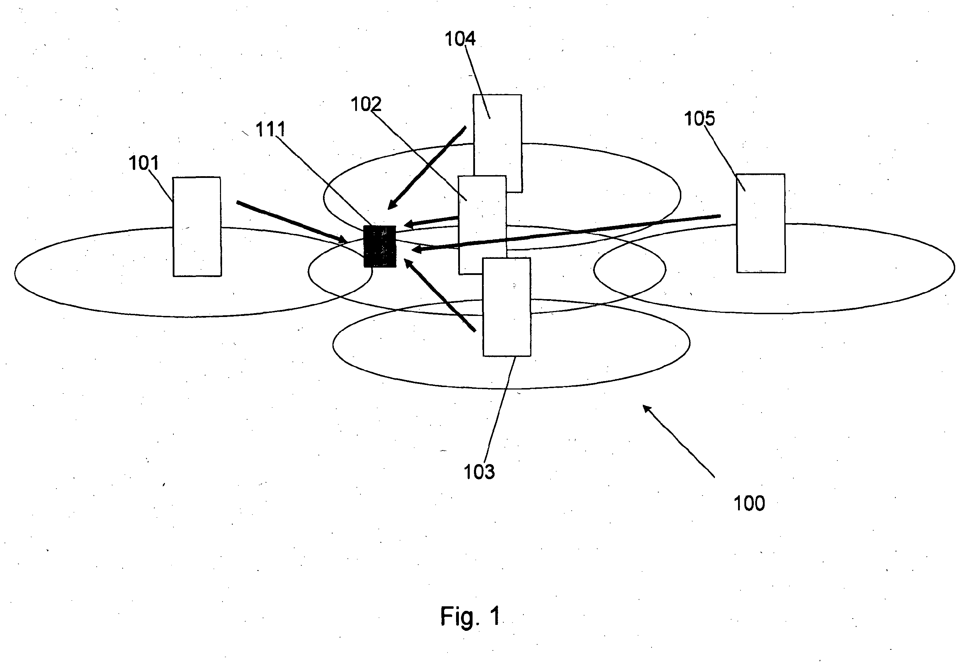

Fig. 1 shows a wireless communication system 100 comprising five base stations 101, 102, 103, 104 and 105 being arranged as neighboring base stations. The mobile communication system 100 further comprises a mobile terminal 111 located between the first base station 101 and the second base station 102.

During the transmission and reception of signals between a mobile terminal and a set of base stations, or during the initiation of a transmission process, one or more virtual base stations can be formed to transmit synchronously from a set of base stations to one or more mobiles terminals. In order to accomplish this, a set of channel quality measurements are completed between the mobile terminal 111 and a set of candidate base stations 101-105 that are able reach the mobile terminal 111. When these measurements are received by a network element of the mobile communication system 100, the virtual base station is formed according to the measured channel quality values.

The virtual base station is formed by a group of candidate base stations by comparing the channel quality of each of the candidate base stations with the first threshold and forming the virtual base station by all the candidates that achieve a measured channel quality higher than the first threshold. Alternatively, the candidate base stations 101-105 are ordered by the measured channel quality and a virtual base station is formed by a predetermined number of base stations that obtained the highest measured channel qualities.

Once the virtual base station is formed, the radio frame structures and the radio frame transmission time are synchronized between all the base stations forming the virtual base station. The transmission of the radio frame structure is initiated at the synchronized transmission time by each base station forming the virtual base station. The base stations forming the virtual base station use a common identifier for identifying the virtual base station. The mobile terminal is therefore not able to identify the different base stations forming the virtual base station, and for the mobile terminal 111, the communication is identical as if it were communicating with a single base station. Then, data from the mobile terminal 111 is received by each of the base stations forming the virtual base station.

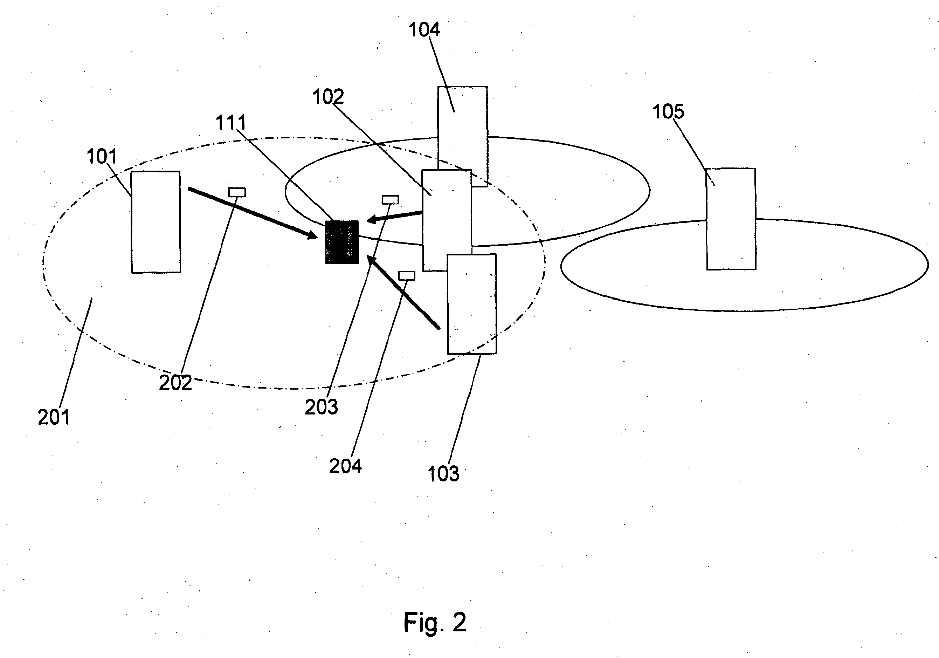

Fig. 2 shows the same mobile communication system 100 of fig. 1 comprising the five base stations 101-105 and a virtual base station 201 comprising the base stations 101-103. The mobile communication system 100 further comprises the same wireless terminal 111 of fig. 1.

After all the set of channel qualities between the mobile terminal 111 and the base stations 101-105 have been measured and received by one of the network elements of the mobile communication system 100, that may be one of the base stations forming the virtual base station or a core network element, the channel quality values are ordered and the candidate base stations with the highest channel quality form the virtual base station. In this case, the base station with the highest channel quality levels correspond to the base stations 101-103. In this alternative procedure, the predetermined number of base stations to form a virtual base station is "three", and therefore, the first three base stations with the highest channel quality level are selected to form the virtual base station 201.

Further, the base stations 101-103 forming the virtual base station 201 synchronize the radio frame structures and the radio frame transmission time and transmit the radio frame structures 202-204 at the synchronized transmission time, so that the radio frame structure is transmitted simultaneously by all the base stations forming the virtual base station. Parts of the structure and content of all the radio frame structures 202-204 are identical. Then, a network element of the mobile communication system 100 receive the data sent by the mobile terminal and initiate to combine the data received by the base stations. The combination of the data received from all the base stations may be completed by a network element, that may be one of the base stations forming the virtual base station or an external network element within the core network or the radio access network.

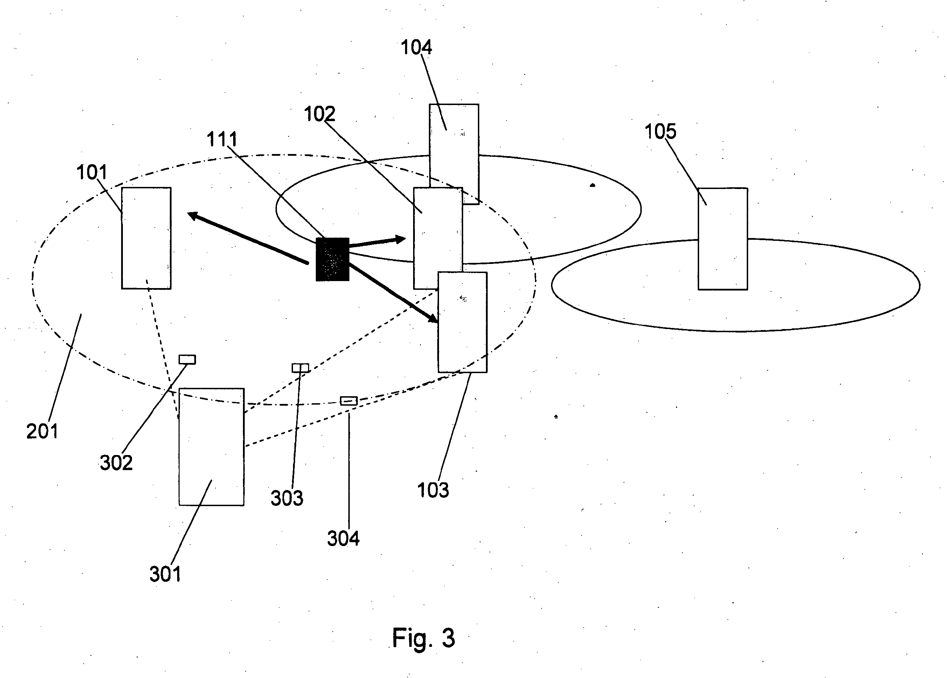

Fig. 3 shows the same wireless communication system 100 of figs. 1 and 2 comprising the five base stations 101-105, the wireless terminal 111 and the virtual base station 201 further comprising the base stations 101-103. The wireless communication system 100 further comprises a network element 301 coupled to the virtual base station 201.

After the set of channel quality are measured between the set of base stations 101-105 and at least one wireless terminal 111, the virtual base station is formed by comparing and ordering the values of the channel quality for each base station. All the candidate base stations that form the virtual base station 201 synchronize their radio frame structures and also synchronize the radio frame transmission time for simultaneous transmission to the mobile terminal 111, or to the set of mobile terminals that communicate with the virtual base station. As all the base stations of the virtual base station 201 share a common identifier, the mobile terminal 111 is not able to differentiate between the set of base stations and all the base stations are able to receive the data transmitted by the mobile terminal 111.

When the base stations 101-103 receive the data of the wireless terminal, the data 302-304 is forwarded to the network element 301. After the network element 301 has received all the data from all the base stations forming the virtual base station, the network element 301 initiates a diversity techniques, as for example the maximum ratio combining, or discards a combination of the data and proceeds to select the best signal of all the received data.

During the transmission and reception process between the mobile terminal 111 and the virtual base station 201, the channel conditions may change and therefore new base stations may be added to the virtual base stations, if their channel quality values are higher than the predetermined first threshold. Also, one or more of the base stations forming the virtual base stations may be dropped off the virtual base station 201, if the channel quality value is below a second threshold and/or this new channel quality value is below the second threshold for a certain period of time. If the mobile terminal starts moving, the direction of the mobile terminal 111 can be measured and new base stations can be added to the virtual base station, according to the direction of the mobile terminal.

Alternatively, the position of the mobile terminal 111 can be measured and the antennas of the base station forming the virtual base station can be configured and activated for transmitting the radio frame structure to the mobile terminal 111, so that only the antennas that are directed towards the mobile terminal position are activated and used during transmission.

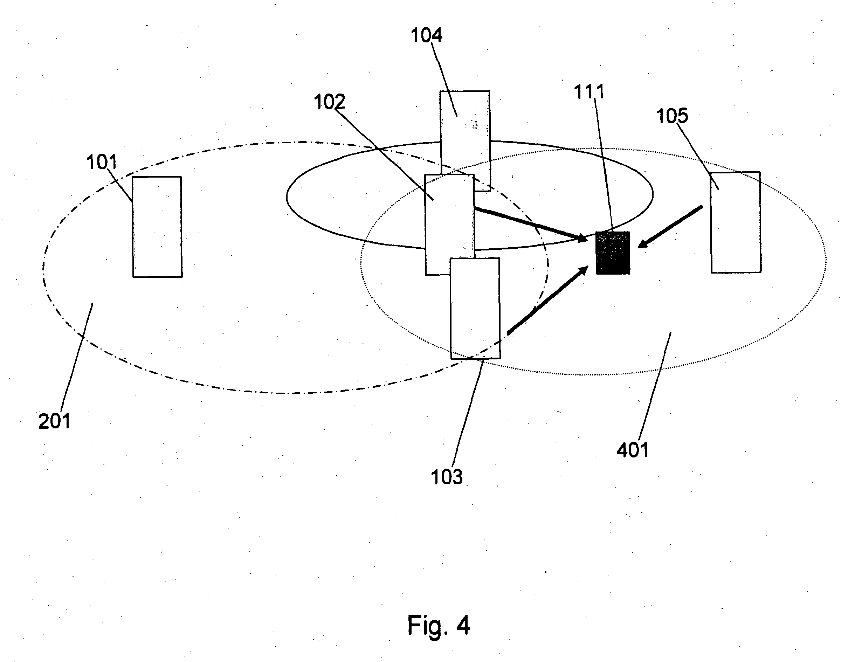

Fig. 4 shows the same wireless communication system 100 of the previous figs. comprising the five base stations 101-105 and the wireless terminal 111. The mobile terminal 111 of fig. 3 has moved to the right and is now located between the third base station 103 and the fifth base station 105.

During the transmission and reception procedure between the mobile terminal 111 and the formed virtual base station, the mobile terminal 111 may change position, and a new arrangement of the base stations forming the virtual base station may be needed, in order to maintain a required signal quality or quality of service. In a first possible implementation, the virtual base station include new base station in the new position or in the direction the mobile terminal. For example, in the virtual base station 401, the base station 101 is substituted by the base station 105. If this is not possible, then a handover may be initiated between the virtual base station 201 and a neighbor virtual base station 401 formed by the base stations 102, 103 and 105. This may occur if a signal strength received by the mobile terminal from the virtual base station 201 is below a second threshold. In general, the neighboring virtual base stations may include base stations of other virtual base stations or base stations that belong exclusively to one virtual base station.

It is further possible to generate a first vector with the measured channel qualities of the a first mobile terminal 111 and also to generate a second vector of a second mobile terminal and comparing both vectors., The vectors represent all measured channel qualities between the mobile terminals and all the base stations forming a set of base stations. If the correlation between channel quality vectors of both mobile terminals is high, a single virtual base station can be formed and used for both terminals. Otherwise, if the first and the second vector are not correlated or if the correlation is low, two different virtual base stations can be formed from the set of base stations.

In an alternative implementation, according to the direction of the mobile terminal 111, or according to the measured channel qualities, the first base station 101 may be dropped off the virtual base station 201 and the base station 105 may be added to the virtual base station, so that the virtual base station is now formed by the base station 102, 103 and 105.

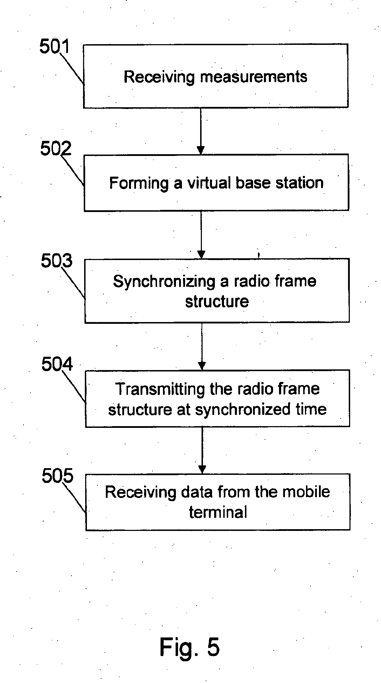

Fig. 5 shows a flowchart 500 representing the method for forming a virtual base station in a network element of a mobile communication system, the method comprising receiving the measurements of a set of channel quality in a first step 501 between a mobile terminal and a set of candidate base stations; forming a virtual base station in a second step 502 by grouping candidate base stations according to the measured channel quality; synchronizing a radio frame structure and a radio frame transmission time in a third step 503 for each base station forming the virtual base station; transmitting the radio frame structure on the synchronized transmission time in a fourth step 504 by each base station of the virtual base station; and receiving data from the mobile terminal in a fifth step 505 by the base stations forming the virtual base station.

### List of reference numerals

- 100: Mobile communication system
- 101: First base station
- 102: Second base station
- 103: Third base station
- 104: Fourth base station
- 105: Fifth base station
- 111: Mobile terminal
- 201: Virtual base station
- 202: First radio frame structure
- 203: Second radio frame structure
- 204: Third radio frame structure
- 301: Network element
- 302: First data
- 303: Second data
- 304: Fourth data
- 401: Second virtual base station
- 500: Flowchart
- 501: First step
- 502: Second step
- 503: Third step
- 504: Fourth step
- 505: Fifth step

## Claims

1. A method providing a virtual base station in a mobile communication system (100), the method comprising:
- receiving measurements of a set of channel qualities between a mobile terminal (111) and a set of base stations (101-105);
- forming said virtual base station (201) by grouping candidate base stations of said set of base stations (101-105) according to said set of measured channel qualities;
- synchronizing a radio frame structure and a radio frame transmission time with said candidate base stations forming said virtual base station (201), wherein said synchronized frame structure of each base station further comprises a common identifier for identifying said virtual base station;
- transmitting said radio frame structure (202-203) on said synchronized transmission time to said mobile terminal (111), wherein said radio frame structure is transmitted by each candidate base station of said virtual base station (201);
- receiving data from said mobile terminal (111), wherein said data is received by each candidate base station forming said virtual base station (201).

2. The method of claim 1, further comprising:
- comparing said channel quality of each candidate base station with a first threshold;
wherein said virtual base station (201) is formed of candidate base stations having a measured channel quality higher than said first threshold.

3. The method of claim 1, further comprising:
- ordering said candidate base stations by said measured channel quality of each candidate base station;
wherein said virtual base station (201) is formed with a predetermined number of base stations having a highest measured channel quality.

4. The method of any of the preceding claims, wherein a network element combines data received from all base station forming said virtual base station (201).

5. The method of any of the preceding claims, wherein said network element is one of the base stations forming said virtual base station

6. The method of any of the preceding claims further comprising:
- adding a neighbour base station (105) to said virtual base station (201), if said neighbour base station (105) has a channel quality higher than said first threshold.

7. The method of any of the preceding claims further comprising:
- measuring a movement direction of said mobile terminal (111);
- adding new base stations (105) to said virtual base station on said movement direction of said mobile terminal.

8. The method of any of the preceding claims further comprising:
- measuring a position of said mobile terminal (111);
- configuring what antennas of each base station are activated for transmitting said radio frame structure to said mobile terminal (111).

9. The method of any of the preceding claims, further comprising:
- initiating a handover from said virtual base station (201) to a neighbour virtual base station, if a signal strength received by said mobile terminal from said virtual base station is below a second threshold.

10. The method of any of the preceding claims further comprising:
- generating a first vector of a first mobile terminal (111) and at least a second vector of at least a second mobile terminal, wherein said first and second vector represent all measured channel qualities between said mobile terminals and said base stations forming a set of base stations;
- calculating a correlation between said first and said second vector;
- forming a single virtual base station and initiating a transmission between said single virtual base station and said mobile terminals, if said correlation is high;
- forming a first and a second virtual base station and initiating transmissions between said first mobile terminal and said first virtual base station and between said second mobile terminal and said second virtual base station, if said correlation is low.

11. A network element for a mobile communication system being operable to perform a method according to any of the claims 1 to 10.

12. The network element of claim 11, wherein said network element is a base station or a core network element.

13. A computer program product stored on a storage medium, comprising executable program means for causing a base station to perform the following steps:
- receiving measurements of a set of channel qualities between a mobile terminal (111) and a set of base stations (101-105);
- forming said virtual base station (201) by grouping candidate base stations of said set of base stations (101-105) according to said set of measured channel qualities;
- synchronizing a radio frame structure and a radio frame transmission time with said candidate base stations forming said virtual base station (201), wherein said synchronized frame structure of each base station further comprise a common identifier for identifying said virtual base station;
- transmitting said radio frame structure (202-203) on said synchronized transmission time to said mobile terminal (111);
- receiving data from said mobile terminal (111).

14. A computer program product stored on a storage medium, comprising executable program means for causing a core network element to perform the following steps:
- receiving measurements of a set of channel qualities between a mobile terminal (111) and a set of base stations (101-105);
- forming a virtual base station (201) by grouping candidate base stations of, said set of base stations (101-105) according to said set of measured channel qualities;
- synchronizing a radio frame structure and a radio frame transmission time with said candidate base stations forming said virtual base station (201), wherein said synchronized frame structure of each base station further comprise a common identifier for identifying said virtual base station.

15. A computer program product stored on a storage medium, comprising executable program means for causing a base station being part of a virtual base station (201) to perform the following steps:
- synchronizing a radio frame structure and a radio frame transmission time with candidate base stations forming said virtual base station (201), wherein said synchronized frame structure of each base station further comprise a common identifier for identifying said virtual base station;
- transmitting a synchronized radio frame structure (202-203) on a synchronized transmission time to a mobile terminal (111), wherein said radio frame structure is transmitted by each candidate base station of said virtual base station (201);
- receiving data from said mobile terminal (111), wherein said data is received by each candidate base station forming said virtual base station (201).

## Patentansprüche

1. Verfahren zur Bereitstellung einer virtuellen Basisstation in einem mobilen Kommunikationssystem (100), wobei das Verfahren umfasst:
- Empfangen von Messwerten eines Satzes von Kanalqualitäten zwischen einem mobilen Endgerät (111) und einem Satz von Basisstationen (101-105);
- Bilden der besagten virtuellen Basisstation (201) durch Gruppieren von Kandidatenbasisstationen des besagten Satzes von Basisstationen (101-105) gemäß dem besagten Satz von gemessenen Kanalqualitäten;
- Synchronisieren einer Funkrahmenstruktur und einer Funkrahmenübertragungszeit mit den besagten Kandidatenbasisstationen, welche die besagte virtuelle Basisstation (201) bilden, wobei die besagte synchronisierte Rahmenstruktur einer jeden Basisstation weiterhin eine gemeinsame Kennung zur Identifizierung der besagten virtuellen Basisstation umfasst;
- Übertragen der besagten Funkrahmenstruktur (202-203) zu der besagten synchronisierten Übertragungszeit an das besagte mobile Endgerät (111), wobei die besagte Funkrahmenstruktur von jeder Kandidatenbasisstation der besagten virtuellen Basisstation (201) übertragen wird;
- Empfangen von Daten von dem besagten mobilen Endgerät (111), wobei die besagten Daten an jeder Kandidatenbasisstation welche die besagte virtuelle Basisstation (201) bildet, empfangen werden.

2. Verfahren nach Anspruch 1, weiterhin umfassend:
- Vergleichen der besagten Kanalqualität einer jeden Kandidatenbasisstation mit einem ersten Grenzwert;
wobei die besagte virtuelle Basisstation (201) aus Kandidatenbasisstationen, deren gemessene Kanalqualität den besagten ersten Grenzwert überschreitet, gebildet wird.

3. Verfahren nach Anspruch 1, weiterhin umfassend:
- Ordnen der besagten Kandidatenbasisstationen gemäß der besagten gemessenen Kanalqualität einer jeden Kandidatenbasisstation;
wobei die besagte virtuelle Basisstation (201) mit einer vordefinierten Anzahl von Basisstationen, welche eine höchste gemessene Kanalqualität aufweisen, gebildet wird.

4. Verfahren nach einem beliebigen der vorstehenden Ansprüche, wobei ein Netzwerkelement die von allen Basisstationen, welche die besagte virtuelle Basisstation (201) bilden, empfangenen Daten kombiniert.

5. Verfahren nach einem beliebigen der vorstehenden Ansprüche, wobei das besagte Netzwerkelement eine der Basisstationen, welche die besagte virtuelle Basisstation bilden, ist.

6. Verfahren nach einem beliebigen der vorstehenden Ansprüche, weiterhin umfassend:
- Hinzufügen einer benachbarten Basisstation (105) zu der besagten virtuellen Basisstation (201), wenn die besagte benachbarte Basisstation (105) eine den besagten ersten Grenzwert überschreitende Kanalqualität aufweist.

7. Verfahren nach einem beliebigen der vorstehenden Ansprüche, weiterhin umfassend:
- Messen einer Bewegungsrichtung des besagten mobilen Endgeräts (111);
- Hinzufügen von neuen Basisstationen (105) zu der besagten virtuellen Basisstation auf der besagten Bewegungsrichtung des besagten mobilen Endgeräts.

8. Verfahren nach einem beliebigen der vorstehenden Ansprüche, weiterhin umfassend:
- Messen einer Position des besagten mobilen Endgeräts (111);
- Konfigurieren, welche Antennen einer jeden Basisstation für die Übertragung der besagten Funkrahmenstruktur an das besagte mobile Endgerät (111) aktiviert sind.

9. Verfahren nach einem beliebigen der vorstehenden Ansprüche, weiterhin umfassend:
- Initiieren eines Handover-Vorgangs von der besagten virtuellen Basisstation (201) an eine benachbarte virtuelle Basisstation, wenn die Stärke eines an dem besagten mobilen Endgerät von der besagten virtuellen Basisstation empfangenen Signals einen zweiten Grenzwert unterschreitet.

10. Verfahren nach einem beliebigen der vorstehenden Ansprüche, weiterhin umfassend:
- Erzeugen eines ersten Vektors eines ersten mobilen Endgeräts (111) und mindestens eines zweiten Vektors mindestens eines zweiten mobilen Endgeräts, wobei der besagte erste und der besagte zweite Vektor alle gemessenen Kanalqualitäten zwischen den besagten mobilen Endgeräten und den besagten Basisstationen, welche einen Satz von Basisstationen bilden, darstellen;
- Berechnen einer Korrelation zwischen dem besagten ersten und dem besagten zweiten Vektor;
- Bilden einer einzelnen virtuellen Basisstation, und Initiieren einer Übertragung zwischen der besagten einzelnen virtuellen Basisstation und den besagten mobilen Endgeräten, wenn die besagte Korrelation hoch ist;
- Bilden einer ersten und einer zweiten virtuellen Basisstation, und Initiieren von Übertragungen zwischen dem besagten ersten mobilen Endgerät und der besagten ersten virtuellen Basisstation sowie zwischen dem besagten zweiten mobilen Endgerät und der besagten zweiten virtuellen Basisstation, wenn die Korrelation niedrig ist.

11. Netzwerkelement für ein mobiles Kommunikationssystem, betreibbar für das Durchführen eines Verfahrens gemäß einem beliebigen der Ansprüche 1 bis 10.

12. Netzwerkelement nach Anspruch 11, wobei das besagte Netzwerkelement eine Basisstation oder ein Kernnetzwerkelement ist.

13. Computerprogramm-Produkt, welches auf einem Speichermedium gespeichert ist und ausführbare Programmmittel umfasst, um eine Basisstation zu veranlassen, die folgenden Schritte auszuführen:
- Empfangen von Messwerten eines Satzes von Kanalqualitäten zwischen einem mobilen Endgerät (111) und einem Satz von Basisstationen (101-105);
- Bilden der besagten virtuellen Basisstation (201) durch Gruppieren von Kandidatenbasisstationen des besagten Satzes von Basisstationen (101-105) gemäß dem besagten Satz von gemessenen Kanalqualitäten;
- Synchronisieren einer Funkrahmenstruktur und einer Funkrahmenübertragungszeit mit den besagten Kandidatenbasisstationen, welche die besagte virtuelle Basisstation (201) bilden, wobei die besagte synchronisierte Rahmenstruktur einer jeden Basisstation weiterhin eine gemeinsame Kennung zur Identifizierung der besagten virtuellen Basisstation umfasst;
- Übertragen der besagten Funkrahmenstruktur (202-203) zu der besagten synchronisierten Übertragungszeit an das besagte mobile Endgerät (111);
- Empfangen von Daten von dem besagten mobilen Endgerät (111).

14. Computerprogramm-Produkt, welches auf einem Speichermedium gespeichert ist und ausführbare Programmmittel umfasst, um ein Kernnetzwerkelement zu veranlassen, die folgenden Schritte auszuführen:
- Empfangen von Messwerten eines Satzes von Kanalqualitäten zwischen einem mobilen Endgerät (111) und einem Satz von Basisstationen (101-105);
- Bilden einer virtuellen Basisstation (201) durch Gruppieren von Kandidatenbasisstationen des besagten Satzes von Basisstationen (101-105) gemäß dem besagten Satz von gemessenen Kanalqualitäten;
- Synchronisieren einer Funkrahmenstruktur und einer Funkrahmenübertragungszeit mit den besagten Kandidatenbasisstationen, welche die besagte virtuelle Basisstation (201) bilden, wobei die besagte synchronisierte Rahmenstruktur einer jeden Basisstation weiterhin eine gemeinsame Kennung zur Identifizierung der besagten virtuellen Basisstation umfasst.

15. Computerprogramm-Produkt, welches auf einem Speichermedium gespeichert ist und ausführbare Programmmittel umfasst, um eine Basisstation, welche Bestandteil einer virtuellen Basisstation (201) ist, zu veranlassen, die folgenden Schritte auszuführen:
- Synchronisieren einer Funkrahmenstruktur und einer Funkrahmenübertragungszeit mit den besagten Kandidatenbasisstationen, welche die besagte virtuelle Basisstation (201) bilden, wobei die besagte synchronisierte Rahmenstruktur einer jeden Basisstation weiterhin eine gemeinsame Kennung zur Identifizierung der besagten virtuellen Basisstation umfasst;
- Übertragen einer synchronisierten Funkrahmenstruktur (202-203) zu einer synchronisierten Übertragungszeit an ein mobiles Endgerät (111), wobei die besagte Funkrahmenstruktur von jeder Kandidatenbasisstation der besagten virtuellen Basisstation (201) übertragen wird;
- Empfangen von Daten von dem besagten mobilen Endgerät (111), wobei die besagten Daten an jeder Kandidatenbasisstation, welche eine virtuelle Basisstation (201) bildet, empfangen werden.

## Revendications

1. Procédé fournissant une station de base virtuelle dans un système de communication mobile (100), le procédé comprenant les étapes suivantes :
- recevoir des mesures d'un ensemble de qualités de canal entre un terminal mobile (111) et un ensemble de stations de base (101-105) ;
- former ladite station de base virtuelle (201) en regroupant des stations de base candidates dudit ensemble de stations de base (101-105) conformément audit ensemble de qualités de canal mesurées ;
- synchroniser une structure de trame radio et un temps de transmission de trame radio avec lesdites stations de base candidates formant ladite station de base virtuelle (201), ladite structure de trame synchronisée de chaque station de base comprenant en outre un identifiant commun pour identifier ladite station de base virtuelle ;
- transmettre ladite structure de trame radio (202-203) sur ledit temps de transmission synchronisé audit terminal mobile (111), ladite structure de trame radio étant transmise par chaque station de base candidate de ladite station de base virtuelle (201) ;
- recevoir des données à partir dudit terminal mobile (111), lesdites données étant reçues par chaque station de base candidate formant ladite station de base virtuelle (201).

2. Procédé selon la revendication 1, comprenant en outre l'étape suivante :
- comparer ladite qualité de canal de chaque station de base candidate à un premier seuil ;
ladite station de base virtuelle (201) étant formée de stations de base candidates ayant une qualité de canal mesurée supérieure audit premier seuil.

3. Procédé selon la revendication 1, comprenant en outre l'étape suivante :
- classer lesdites stations de base candidates en fonction de ladite qualité de canal mesurée de chaque station de base candidate ;
ladite station de base virtuelle (201) étant formée d'un nombre prédéterminé de stations de base ayant la qualité de canal mesurée la plus élevée.

4. Procédé selon l'une quelconque des revendications précédentes, dans lequel une élément de réseau combine des données provenant de toutes les stations de base formant ladite station de base virtuelle (201).

5. Procédé selon l'une quelconque des revendications précédentes, dans lequel ledit élément de réseau est une des stations de base formant ladite station de base virtuelle.

6. Procédé selon l'une quelconque des revendications précédentes comprenant en outre l'étape suivante :
- ajouter une station de base voisine (105) à ladite station de base virtuelle (201), si ladite station de base voisine (105) a une qualité de canal supérieure audit premier seuil.

7. Procédé selon l'une quelconque des revendications précédentes comprenant en outre les étapes suivantes :
- mesurer un sens de déplacement dudit terminal mobile (111) ;
- ajouter de nouvelles stations de base (105) à ladite station de base virtuelle sur ledit sens de déplacement dudit terminal mobile.

8. Procédé selon l'une quelconque des revendications précédentes comprenant en outre les étapes suivantes :
- mesurer une position dudit terminal mobile (111) ;
- configurer quelles antennes de chaque station de base sont activées pour transmettre ladite structure de trame radio audit terminal mobile (111).

9. Procédé selon l'une quelconque des revendications précédentes, comprenant en outre l'étape suivante :
- initier un transfert entre ladite station de base virtuelle (201) et une station de base virtuelle voisine, si une intensité de signal reçue par ledit terminal mobile à partir de ladite station de base virtuelle est inférieure à un deuxième seuil.

10. Procédé selon l'une quelconque des revendications précédentes comprenant en outre les étapes suivantes :
- générer un premier vecteur d'un premier terminal mobile (111) et au moins un deuxième vecteur d'au moins un deuxième terminal mobile, lesdits premier et deuxième vecteurs représentant toutes les qualités de canal mesurées entre lesdits terminaux mobiles et lesdites stations de base formant un ensemble de stations de base ;
- calculer une corrélation entre ledit premier et ledit deuxième vecteurs ;
- former une station de base virtuelle unique et initier une transmission entre ladite station de base virtuelle unique et lesdits terminaux mobiles, si ladite corrélation est élevée ;
- former une première et une deuxième stations de base virtuelles et initier des transmissions entre ledit premier terminal mobile et ladite première station de base virtuelle et entre ledit deuxième terminal mobile et ladite deuxième station de base virtuelle, si ladite corrélation est faible,

11. Élément de réseau pour un système de communication mobile permettant d'exécuter un procédé selon l'une quelconque des revendications 1 à 10.

12. Élément de réseau selon la revendication 11, dans lequel ledit élément de réseau est une station de base ou un élément de coeur de réseau.

13. Produit de programme informatique stocké sur un support de stockage, comprenant des moyens de programmation exécutables pour entraîner l'exécution par une station de base des étapes suivantes :
- recevoir des mesures d'un ensemble de qualités de canal entre un terminal mobile (111) et un ensemble de stations de base (101-105) ;
- former ladite station de base virtuelle (201) en regroupant des stations de base candidates dudit ensemble de stations de base (101-105) conformément audit ensemble de qualités de canal mesurées ;
- synchroniser une structure de trame radio et un temps de transmission de trame radio avec lesdites stations de base candidates formant ladite station de base virtuelle (201), ladite structure de trame synchronisée de chaque station de base comprenant en outre un identifiant commun pour identifier ladite station de base virtuelle ;
- transmettre ladite structure de trame radio (202-203) sur ledit temps de transmission synchronisé audit terminal mobile (111) ;
- recevoir des données à partir dudit terminal mobile (111).

14. Produit de programme informatique stocké sur un support de stockage, comprenant des moyens de programmation exécutables pour entraîner l'exécution par un élément de coeur de réseau des étapes suivantes :
- recevoir des mesures d'un ensemble de qualités de canal entre un terminal mobile (111) et un ensemble de stations de base (101-105) ;
- former une station de base virtuelle (201) en regroupant des stations de base candidates dudit ensemble de stations de base (101-105) conformément audit ensemble de qualités de canal mesurées ;
- synchroniser une structure de trame radio et un temps de transmission de trame radio avec lesdites stations de base candidates formant ladite station de base virtuelle (201), ladite structure de trame synchronisée de chaque station de base comprenant en outre un identifiant commun pour identifier ladite station de base virtuelle.

15. Produit de programme informatique stocké sur un support de stockage, comprenant des moyens de programmation exécutables pour entraîner l'exécution par une station de base, faisant partie d'une station de base virtuelle (201), des étapes suivantes :
- synchroniser une structure de trame radio et un temps de transmission de trame radio avec des stations de base candidates formant ladite station de base virtuelle (201), ladite structure de trame synchronisée de chaque station de base comprenant en outre un identifiant commun pour identifier ladite station de base virtuelle ;
- transmettre une structure de trame radio synchronisée (202-203) sur un temps de transmission synchronisé à un terminal mobile (111), ladite structure de trame radio étant transmise par chaque station de base candidate de ladite station de base virtuelle (201) ;
- recevoir des données à partir dudit terminal mobile (111), lesdites données étant reçues par chaque station de base candidate formant ladite station de base virtuelle (201).
